**Europäisches Patentamt**

**European Patent Office**

**Office européen des brevets**

(19)

(11) Veröffentlichungsnummer: **0 041 469**

**A1**

(12) # EUROPÄISCHE PATENTANMELDUNG

(21) Anmeldenummer: 81730047.8

(22) Anmeldetag: 14.05.81

(51) Int. Cl.³: **H 02 H 7/04**

(30) Priorität: 30.05.80 DE 3021002

(43) Veröffentlichungstag der Anmeldung:
09.12.81 Patentblatt 81/49

(84) Benannte Vertragsstaaten:
AT BE CH GB IT LI NL SE

(71) Anmelder: SIEMENS AKTIENGESELLSCHAFT Berlin
und München
Postfach 22 02 61
D-8000 München 22(DE)

(72) Erfinder: Moeller, Jürgen, Dr.-Ing.
Schwendener Strasse 15
D-1000 Berlin 33(DE)

(72) Erfinder: Freygang, Hans-Joachim, Dipl.-Ing.
Albestrasse 26
D-1000 Berlin 41(DE)

(72) Erfinder: Weniger, Manfred, Dr.-Ing.
Schuckertdamm 342
D-1000 Berlin 13(DE)

(72) Erfinder: Bollmann, Klaus
Gorgasring 22
D-1000 Berlin 20(DE)

(54) **Induktiver Spannungswandler.**

(57) Die Primärwicklung (12) eines induktiven Spannungswandlers (11) ist in Reihe mit einem Widerstand (13) an eine
Netzleitung (1) angeschlossen.

Um bei einem solchen Wandler eine hohe thermische
und mechanische Belastung zu vermeiden, ist an den Widerstand (1) ein Steuerteil (23) angeschlossen, das eine Schalteinrichtung (21) zum Anschließen einer Schaltungsanordnung (16) an eine Sekundärwicklung (14) des Spannungswandlers (11) steuert; die Schaltungsanordnung (16) enthält
einen derart bemessenen Ladekreis mit einem Ladekondensator (18), daß bei einer Entladung der Eigenkapazität (8) der
Netzleitung (1) über die Primärwicklung (12) durch das Steuerteil (23) ein eine Gegenerregung hervorrufener Strom fließt.
Der Spannungswandler ist vor allem zum Anschluß an Netzleitungen mit hoher Eigenkapazität geeignet.

FIG 1

0041469

SIEMENS AKTIENGESELLSCHAFT
Berlin und München

Unser Zeichen
VPA 80 P 3742 E

Induktiver Spannungswandler

Die Erfindung bezieht sich auf einen induktiven Spannungswandler mit einer unmittelbar an die Netzleitung mit der zu messenden Spannung angeschlossenen Primärwicklung, mit der in Reihe ein Widerstand liegt, und mit mindestens einer mit einer Bürde versehenen Sekundärwicklung. Ein derartiger Spannungswandler ist aus der DE-AS 10 77 319 bekannt.

Es hat sich herausgestellt, daß ein derartiger induktiver Spannungswandler einer hohen thermischen wie auch mechanischen Belastung ausgesetzt ist, wenn er an eine Netzleitung mit relativ hoher Eigenkapazität angeschlossen ist. Die hohe thermische und mechanische Belastung des induktiven Spannungswandlers tritt dabei nicht ständig auf, sondern nur bei gewissen Schaltzuständen der Netzleitung.

Der Erfindung liegt daher die Aufgabe zugrunde, einen induktiven Spannungswandler so zu verbessern, daß er auch bei einem Anschluß an Netzleitungen mit verhältnismäßig hoher Eigenkapazität in jedem denkbaren Schaltzustand der Netzleitung eine mechanische oder thermische Überlastung nicht erfährt. Zur Lösung dieser Aufgabe ist bei einem induktiven Spannungswandler der eingangs angegebenen Art erfindungsgemäß an den Widerstand ein Steuerteil angeschlossen, das eine Schalteinrichtung zum Anschließen einer Schaltungsanordnung an eine Sekundärwicklung des Spannungswandlers steuert; die Schaltungsanordnung enthält einen derart bemessenen Ladekreis mit einem Ladekondensator, daß bei einer Entladung

Kr 3 Sby / 28.05.1980

- 2 -    VPA 80 P 3742 E

der Eigenkapazität der Netzleitung über die Primärwicklung durch die Sekundärwicklung infolge Betätigung der Schalteinrichtung durch das Steuerteil ein Strom fließt, der eine entsprechende Gegenerregung zur Erregung infolge der Entladung hervorruft.

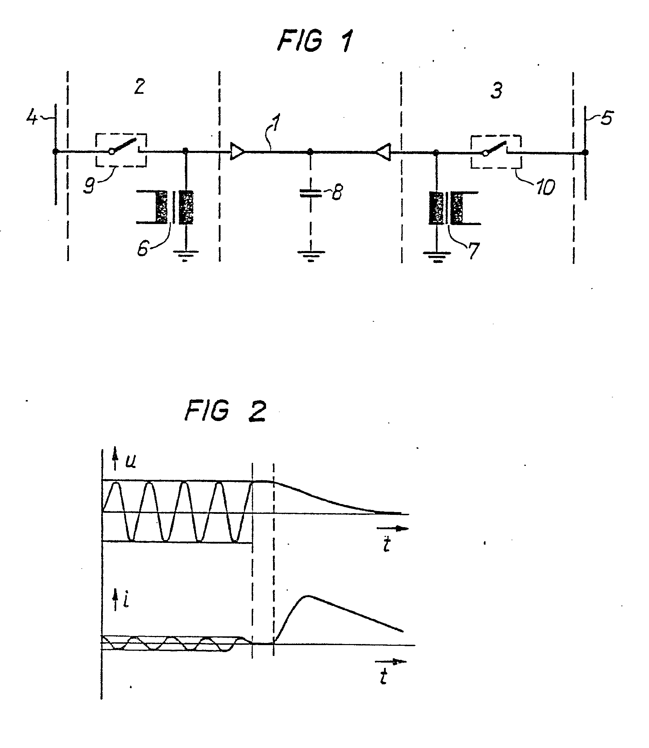

Der Erfindung liegt die Erkenntnis zugrunde, daß durch die Ladung an einer leerlaufenden Netzleitung mit verhältnismäßig großer Eigenkapazität über die Primärwicklung eines angeschlossenen induktiven Spannungswandlers Entladungsvorgänge ablaufen, die im Extremfalle sogar zu eher Zerstörung des Spannungswandlers führen können. Nimmt man einmal an, daß eine Netzleitung mit hoher Eigenkapazität, insbesondere ein Kabel 1 (vgl. Fig. 1), über zwei Überwachungsstationen 2 und 3 mit jeweils einer Sammelschiene 4 bzw. 5 verbunden ist und jede Überwachungsstation 2 bzw. 3 mit einem Spannungswandler 6 bzw. 7 versehen ist, dann ist bei einem Abschalten des Kabels 1 die Eigenkapazität 8 dieses Kabels auf den Scheitelwert der Spannung aufgeladen. Dies ist darauf zurückzuführen, daß - wie Fig. 2 zeigt - der kapazitive Strom i des leerlaufenden Kabels um 90$^\circ$ gegenüber der Spannung u verschoben ist. Da der Lichtbogen des jeweils zugeordneten Schalters 9 bzw. 10 im Nulldurchgang des Stromes erlischt, nimmt die Spannung an der Netzleitung dann gerade ihren Scheitelwert an. Das Kabel 1 behält diese Spannung, bis die Hauptinduktivität des zugeordneten induktiven Spannungswandlers 6 bzw. 7 in die Sättigung gegangen ist, wobei bei dieser Betrachtung vorausgesetzt wird, daß der induktive Spannungswandler sekundärseitig nicht niederohmig belastet ist. Ist die Hauptinduktivität des induktiven Spannungswandlers in Sättigung gegangen, dann ist sie niederohmig geworden, und es fließt nun über die Primärwicklung des Spannungswandlers 6 bzw. 7 ein hoher Strom,

0041469

- 3 -    VPA 80 P 3742 E

der nur noch durch den Wicklungswiderstand und die Streuinduktivitäten begrenzt wird. Im letzten Teil des unteren Diagrammes der Fig. 2 ist dieser hohe Strom in seinem Verlauf über der Zeit t dargestellt. Dieser hohe Strom verursacht nicht nur eine thermische, sondern auch eine mechanische Belastung, die so groß werden kann, daß der induktive Spannungswandler zerstört wird.

Dem wird bei dem erfindungsgemäßen induktiven Spannungswandler dadurch vorgebeugt daß einenennenswerte Sättigung der Hauptinduktivitäten gar nicht erst zugelassen wird, indem - aus dem Primärkreis gesteuert - eine Gegenerregung im Sekundärkreis des Spannungswandlers künstlich erzeugt wird. Dazu dient das an den in Reihe mit der Primärwicklung liegenden Widerstand angeschlossene Steuerteil, das eine Schalteinrichtung so steuert, daß aus dem Ladekreis bzw. aus dem Ladekondensator ein derartiger Strom durch eine Sekundärwicklung getrieben wird, daß sich eine zur Erregung infolge der Entladung entsprechende Gegenerregung ausbildet. Es kommt infolgedessen bei dem erfindungsgemäß ausgebildeten induktiven Spannungswandler auch bei einem Anschluß an eine Netzleitung mit relativ großer Eigenkapazität selbst in einem ungünstigen Schaltzustand nicht zu einer Sättigung der Hauptinduktivitäten und damit auch nicht zu einer thermischen oder mechanischen Überlastung des Wandlers.

Bei dem erfindungsgemäßen Spannungswandler kann die Schaltungsanordnung mit dem Ladekreis in unterschiedlicher Weise sekundärseitig angeordnet sein. So wird es als vorteilhaft erachtet, wenn die Schaltungsanordnung an die Sekundärwicklung angeschlossen ist, an der die übliche Bürde liegt. Dies hat den Vorteil, daß der Spannungswandler nicht mit einer zusätzlichen Sekundärwicklung nur zur Erzeugung der Gegenerregung versehen werden muß, bringt aber insofern Einschränkungen, als die

- 4 -    VPA 80 P 3742 E

Bürde im Hinblick auf den Ladekreis bemessen werden muß.

Ist die Schaltungsanordnung bei einer anderen Ausführungsform des erfindungsgemäßen Spannungswandlers an eine zusätzliche Sekundärwicklung angeschlossen, dann kann eine an die normalerweise vorhandene Sekundärwicklung angeschlossene Bürde in üblicher Weise unter Beachtung der gängigen Anforderungen bemessen werden.

Die Schalteinrichtung kann bei dem erfindungsgemäßen induktiven Spannungswandler ebenfalls unterschiedlich ausgeführt sein; vorzugsweise wird man eine Schalteinrichtung verwenden, die elektronisch gesteuert ist. Mit Vorteil wird eine Schalteinrichtung jedoch verwendet, die aus einem steuerbaren Gleichrichter, z. B. einem Thyristor, besteht.

Insbesondere für die Fälle, in denen in Abhängigkeit von den Ladungsverhältnissen an der Eigenkapazität der Netzleitung die Gegenerregung in der einen oder der anderen Richtung steuerbar sein soll, ist es vorteilhaft, wenn die Schalteinrichtung aus einer Brückenanordnung von vier steuerbaren Gleichrichtern besteht, von denen jeweils zwei schaltungstechnisch einander gegenüberliegende Gleichrichter an einem Ausgang des Steuerteils liegen. Es kann auf diese Weise erreicht werden, daß der Entladestrom aus dem Ladekondensator die angeschlossene Sekundärwicklung mal in der einen und mal in der anderen Richtung durchfließt, so daß sich unterschiedlich gerichtete Gegenerregungen erzielen lassen.

Der Ladekreis enthält vorteilhafterweise eine an den Ladekondensator angeschlossene Ladungsquelle, die über einen Gleichrichter mit dem Ladekondensator verbunden ist.

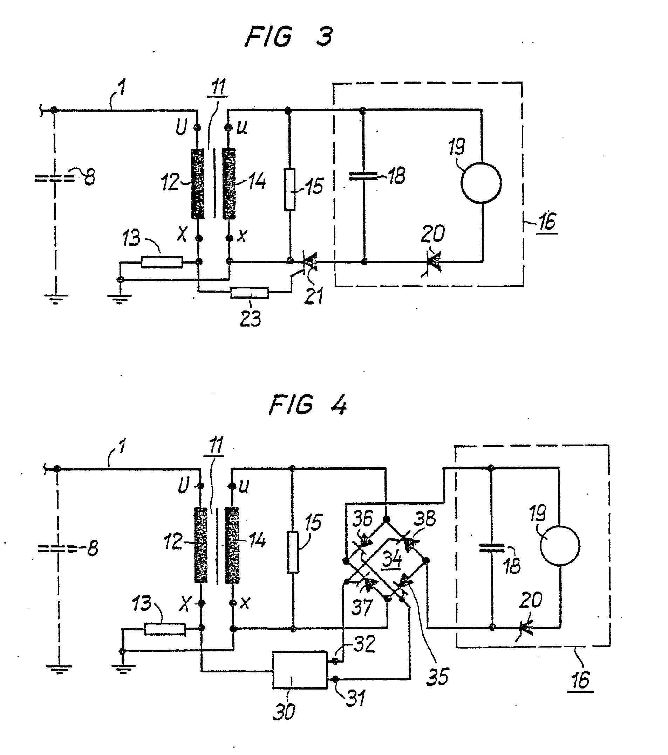

Zur weiteren Erläuterung der Erfindung ist in Fig.3 ein Ausführungsbeispiel des erfindungsgemäßen induktiven Spannungswandlers mit einem einzigen steuerbaren Gleichrichter als Schalteinrichtung und in Fig. 4 ein weiteres Ausführungsbeispiel mit einer Brückenanordnung von vier steuerbaren Gleichrichtern gezeigt.

Der in Fig. 3 dargestellte induktive Spannungswandler 11 weist eine Primärwicklung 12 auf, dessen Wicklungsenden in üblicher Weise mit U, X bezeichnet sind. Das Wicklungsende U ist an die Netzleitung 1 angeschlossen, die eine Eigenkapazität nach Erde aufweist, die in der Fig. 3 durch den Kondensator 8 dargestellt ist. Das Wicklungsende X der Primärwicklung 12 ist an einen Widerstand 13 angeschlossen, der mit seinem von der Primärwicklung 12 abgewandten Ende geerdet ist, so daß bei leerlaufender Netzleitung 1 der Widerstand 13 mit der Primärwicklung 12 einen Entladekreis für die Eigenkapazität 8 der Netzleitung 1 bildet.

Eine Sekundärwicklung 14 des induktiven Spannungswandlers 11 ist ebenfalls in üblicher Weise bezüglich ihrer Wicklungsenden u und x bezeichnet. An die Sekundärwicklung ist in üblicher Weise eine Bürde 15 angeschlossen. Außerdem liegt an der Sekundärwicklung 14 eine Schaltungsanordnung 16. Diese Schaltungsanordnung 16 enthält einen Ladekreis, der einen Ladekondensator 18 und eine Ladungsquelle 19 aufweist. Die Ladungsquelle 19 ist über einen steuerbaren Gleichrichter 20 oder gegebenenfalls auch über einen Widerstand an den Ladekondensator 18 angeschlossen. Die Schaltungsanordnung 16 ist über einen steuerbaren Gleichrichter 21 als Schalteinrichtung, dessen Steuereingang 22 über einen Vorwiderstand 23 mit dem Wicklungsende X der Primärwicklung 11 verbunden ist, an das Wicklungsende x der Sekundärwicklung 14 angeschlossen, das außerdem geerdet ist.

Der in Fig. 3 dargestellte und in der angegebenen Weise beschaltete, induktive Spannungswandler 11 arbeitet in folgender Weise:

Erfolgt eine Entladung der Eigenkapazität 8 der Netzleitung 1 über die Primärwicklung 12 des induktiven Spannungswandlers 11, dann tritt an dem mit der Primärwicklung in Reihe liegenden Widerstand 13 ein Spannungsabfall auf, der den steuerbaren Gleichrichter 21 durchlässig steuert. Demzufolge wird der Stromkreis mit dem Ladekondensator 18 über die Sekundärwicklung 14 niederohmig, und es beginnt eine Entladung des Ladekondensators 18 über den steuerbaren Gleichrichter 21 und die Sekundärwicklung 14. Der dabei fließende Entladestrom erzeugt eine Erregung des induktiven Spannungswandlers 11, die der vom Entladestrom der Eigenkapazität der Netzleitung 1 verursachten Erregung entgegengerichtet ist, so daß eine Sättigung des induktiven Spannungswandlers 11 verhindert ist. Es ist dadurch der in Fig. 2 dargestellte hohe Strom nach dem Schalten der Leistungsschalter verhindert und somit auch eine thermische und mechanische Überlastung des Spannungswandlers 11 vermieden.

Das Ausführungsbeispiel nach Fig. 4 stimmt im wesentlichen mit dem nach Fig. 3 überein, so daß in der Fig. 4 für die gleichen Schaltungselemente dieselben Bezugszeichen wie in Fig. 3 verwendet sind. Im Unterschied zum Ausführungsbeispiel nach Fig. 3 ist bei dem nach Fig. 4 als Steuerteil nicht nur ein Widerstand verwendet, sondern eine elektronische Schaltungseinheit 30, die zwei Ausgänge 31 und 32 besitzt. An die Sekundärwicklung 14 ist die Schaltungsanordnung 16 angeschlossen, die wiederum einen Ladekreis mit einem Ladekondensator 18 und einer Ladungsquelle 19 enthält. Die Schalteinrichtung besteht hier jedoch nicht aus einem
einzigen steuerbaren Gleichrichter, sondern aus einer
Brückenanordnung 34 aus vier steuerbaren Gleichrichtern
35 und 36 sowie 37 und 38; diese Gleichrichter 35
bis 38 sind jeweils so angeordnet, daß jeweils zwei
schaltungstechnisch aneinander gegenüberliegende steuerbare Gleichrichter 35 und 36 bzw. 37 und 38 an einen
Ausgang 31 bzw. 32 des Steuerteils 30 angeschlossen sind.

Ist das Steuerteil 30 so ausgelegt, daß es in Abhängigkeit von der Polarität des Spannungsabfalls am Widerstand 13 am Ausgang 31 oder am Ausgang 32 ein Steuersignal abgibt, dann läßt sich erreichen, daß in Abhängigkeit von der Polarität des Spannungsabfalls am Widerstand
13 entweder nur die steuerbaren Gleichrichter 35 und 36
oder die steuerbaren Gleichrichter 37 und 38 durchlässig
gesteuert werden. Dies wiederum hat zur Folge, daß
der Entladestrom aus dem Ladekondensator 18 die Sekundärwicklung 14 entweder in der Richtung vom Wicklungsende
u zum Wicklungsende x oder in umgekehrter Richtung durchfließt. Damit ist dann die Möglichkeit gegeben, in Abhängigkeit von der Polarität der in der Eigenkapazität
8 der Netzleitung 1 gespeicherten Ladung in jedem
Falle einen Entladestrom durch die Sekundärwicklung
14 fließen zu lassen, der jeweils eine Gegenerregung
zu der durch den Entladestrom der Eigenkapazität 8
verursachten Erregung darstellt. Es ist dann in jedem
Falle verhindert, daß der induktive Spannungswandler 11
durch Entladevorgänge der Eigenkapazität einer Netzleitung in die Sättigung gerät und durch den dann fließenden hohen Strom thermisch und mechanisch überlastet
bzw. gar zerstört wird.

Ein besonderer Vorteil dieser Ausführungsform besteht
darin, daß die netzseitig über die Primärwicklung abgeflossene Ladung auf der Sekundärseite im Ladekondensator
gespeichert wird und für die Gegenerregung durch Umschaltung der Schalteinrichtung ausgenutzt
werden kann.

Mit der Erfindung wird ein induktiver Spannungswandler vorgeschlagen, bei dem sich durch verhältnismäßig geringfügige schaltungsmäßige Ergänzungen eine Überlastung oder Beschädigung infolge von Entladungsvorgängen auf der Netz-leitung vermeiden läßt, an die der Wandler primärseitig angeschlossen ist.

4 Figuren
6 Ansprüche

Patentansprüche

1. Induktiver Spannungswandler mit einer unmittelbar an die Netzleitung mit der zu messenden Spannung angeschlossenen Primärwicklung, mit der in Reihe ein Widerstand liegt, und mit mindestens einer mit einer Bürde versehenen Sekundärwicklung, d a d u r c h  g e - k e n n z e i c h n e t , daß an den Widerstand (13) ein Steuerteil (23) angeschlossen ist, das eine Schalteinrichtung (21) zum Anschließen einer Schaltungsanordnung (16) an eine Sekundärwicklung (14) des Spannungswandlers (11) steuert und daß die Schaltungsanordnung (16) einen derart bemessenen Ladekreis mit einem Ladekondensator (18) enthält, daß bei einer Entladung der Eigenkapazität ( 8) der Netzleitung (1) über die Primärwicklung (12) durch die Sekundärwicklung (14) infolge Betätigung der Schalteinrichtung (21) durch das Steuerteil (23) ein Strom fließt, der eine entsprechende Gegenerregung zur Erregung infolge der Entladung hervorruft.

2. Spannungswandler nach Anspruch 1, d a d u r c h  g e - k e n n z e i c h n e t , daß die Schaltungsanordnung (16) an die Sekundärwicklung (14) angeschlossen ist, an der die übliche Bürde (15) liegt.

3. Spannungswandler nach Anspruch 1, d a d u r c h  g e - k e n n z e i c h n e t , daß die Schaltungsanordnung an eine zusätzliche Sekundärwicklung angeschlossen ist.

4. Spannungswandler nach einem der vorangehenden Ansprüche, d a d u r c h  g e k e n n z e i c h n e t , daß die Schalteinrichtung aus einem steuerbaren Gleichrichter (21) besteht.

5. Spannungswandler nach einem der Ansprüche 1 bis 3,
d a d u r c h   g e k e n n z e i c h n e t , daß
die Schalteinrichtung aus einer Brückenanordnung (34)
von vier steuerbaren Gleichrichtern (35 bis 38) besteht,
von denen jeweils zwei schaltungstechnisch einander
gegenüberliegende Gleichrichter (35, 36; 37, 38) an
einem Ausgang (31; 32) des Steuerteils (30) liegen.

6. Spannungswandler nach einem der vorangehenden Ansprüche, d a d u r c h   g e k e n n z e i c h n e t , daß
der Ladekreis eine an den Ladekondensator (18) angeschlossene Ladungsquelle (19) enthält und daß die Ladungsquelle (19) über einen Gleichrichter (20) mit dem
Ladekondensator (18) verbunden ist.

FIG 1

FIG 2

FIG 3

FIG 4

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - C - 1 026 857 (LICENTIA PATENT-VERWALTUNGS-GMBH) <br> * Spalte 3, Zeilen 1 bis 39; Fig. 1 * <br> -- | 1-3 |
| | DE - A - 2 221 048 (COMPTEURS SCHLUMBERGER) <br> * Seite 8, Absätze 3 und 4; Fig. 2 * <br> -- | 1 |
| | DE - A1 - 2 825 714 (KOMMANDITGESELL-SCHAFT RITZ MESSWANDLER GMBH) <br> * Anspruch 1; Seite 1; Fig. 1 * <br> -- | 1 |
| D | DE - B - 1 077 319 (SIEMENS & HALSKE) <br> * Anspruch; Fig. 1, 2 * <br> ---- | |

**KLASSIFIKATION DER ANMELDUNG (Int. Cl.³)**

H 02 H 7/04

**RECHERCHIERTE SACHGEBIETE (Int. Cl.³)**

G 01 R 1/20

H 01 F 40/14

H 02 H 7/04

H 02 H 9/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 27-08-1981 | LEMMERICH |

EPA form 1503.1 08.78